# EUROPEAN PATENT SPECIFICATION

(11) **EP 2 440 391 B1**
(45) Date of publication and mention of the grant of the patent: **26.04.2017**
(21) Application number: 10785592.6
(22) Date of filing: 10.06.2010
(51) Int. Cl.: B29C 70/08, B29C 70/02, B29C 70/40, B29C 70/54, B29C 70/34, B29C 70/44

(54) **METHOD OF PRODUCING COMPOSITE COMPONENTS**
VERFAHREN ZUR HERSTELLUNG VON VERBUNDSTOFFKOMPONENTEN
PROCÉDÉ DE PRODUCTION DE COMPOSANTS COMPOSITES

(30) Priority: 12.06.2009 AU 2009902686
(43) Date of publication of application: 18.04.2012
(73) Proprietor: Quickstep Technologies Pty, Ltd., North Coogee, WA 6163 (AU)
(72) Inventor: GRAHAM, Neil Deryck Bray, Coogee, WA 6166 (AU)
(74) Representative: Hanson, William Bennett
(86) International application number: PCT/AU2010/000709
(87) International publication number: WO 2010/141984

(56) References cited:
- WO-A1-02/058916
- WO-A2-2009/029218
- GB-A- 2 449 146
- US-A- 4 622 091
- US-A- 5 643 522
- US-A- 5 968 639
- US-A1- 2004 113 315
- US-A1- 2006 194 034

## Description

The present invention is generally directed to the manufacture of panels parts and tubular structures and other advanced composite components formed from a composite of materials such as fibre glass, carbon fibre, "Kevlar" (Registered Trade Mark) and epoxy and other resins.

The present invention utilises resins which are in a solid state at normal ambient temperatures. Therefore, the present invention can utilise thermosetting resins such as epoxy polyesters and acrylics and the invention will be described in this application using these materials. It is however also to be appreciated that the present invention can also utilise thermoplastic materials such as the low temperature thermoplastics such as for example polypropylene, polystyrene and polyethylene and the high temperature thermoplastics such as for example PEEK Polyetheretherketone. The term "resin" in this application is therefore to be understood as referring to this range of materials.

In the applicant's International application no. WO 02/058916, there are described a number of different methods and systems for producing advanced composite components. In one of the described methods, very high viscosity resin that is solid at room temperature, is liquefied through heating and then applied to a mould surface. The resin subsequently cools and solidifies following application to thereby form a layer of solidified resin on the mould surface. The solidification of the resin can be facilitated by cooling the mould surface using means such as tubular cooling or a cooling bladder, through which liquid at relatively low temperature is circulated, located under the mould. The preferred method of applying the resin is by a spray apparatus which helps to ensure that air is displaced away from the mould surface by the liquefied resin impacting the mould surface during the spraying procedure but as was envisaged as part of the applicant's International application a range of methods may be employed to apply the resin in molten liquid form onto the mould to ensure its even distribution prior to solidification. Once the resin layer is formed on the mould surface and solidified, then fibre bundle layers in the form of cloth or a combined built up cloth layer or preform and other components such as bleeder cloths and preferably at least one resin flow rate control film can be laid over the solidified resin layer to form the final composite lay-up. The flow rate control film can be laid between the resin layer and a fibre bundle layer or between different fibre bundle layers to control the rate of transfer of resin through the fibre bundle layers during the subsequent curing process. A vacuum film is then laid over the final composite lay-up and sealed to the mould sections so that air can be evacuated from the composite lay-up under the vacuum film. The solidity of the resin enables a full vacuum to be pulled on the part and the air withdrawn along open path ways within the cloth. In the subsequent curing process, heat and pressure is applied to the resin and fibre bundle layers to thereby re-liquefy the resin and allow the fibre bundle layers to sink into the liquefied resin in a controlled manner so as not to blind the resin flow paths before all air is removed from the part. This controlled wetting of the part can be facilitated by the use of a line of heat a "heatwave" across the part to melt the resin in a manner that ensures that the air is removed from in front of the wave of melting resin. The high temperature pressure and vibration as generated by the applicant's patent can be applied to the mould and composite lay-up and thus furthermore acts to evacuate any remaining air from the composite lay-up such that the final advanced composite component that is produced is of light weight high strength and toughness.

There are a number of advantages in initially applying the resin to the mould surface as follows:
a) The trapping of air in the interstice between the mould surface and the composite lay-up that occurs with other production methods such as prepreg, Resin Film Infusion (RFI) or Resin Transfer Moulding (RTM) is minimised or avoided;
b) The resin only has to move through the thickness of the laminate normally measured in milimeters in contrast to liquid control moulding techniques such as RTM or Infusion moulding where the resin is required to move across the part from resin entry point to vacuum suction point in many cases a matter of meters.
c) As the resin is in a continuous layer and in a controlled thickness across the part it can move up through and wet the part in a controlled even manner regardless of the size of the part. This must be contrasted with a liquid control moulding approach where in many cases a number of streams of resin must be employed to rapidly wet the part before the resin starts to react and starts to increase in viscosity and harden. These multiple streams of resin must contact one another at some point and at the contact points of the streams there is the potential for air to be trapped between the two streams resulting in degraded performance at these points and a weakness along the line of stream contact.
d) This facilitates better control of and more even and precise distribution of the resin onto the surfaces where required and then when melted moving through the fibre bundles to precisely wet and fill the laminate thus minimising the possibility of dry spots within the fibre bundle and ensuring accurate resin control in all sections of the part;
e) Through the careful control of the temperature applied to the mould and composite lay-up, and through the use of Kevlar veils, the rate of transfer of resin through the composite lay-up can be more accurately and precisely controlled;
f) As a full vacuum can be pulled prior to the melting of the resin thus all the air is allowed to escape or be removed from the part. Thus fewer air bubbles are retained in the finished composite component manufactured according to this method as the air will naturally move to the upper surface of the composite lay-up as the resin progressively moves through and impregnates the fibre bundle layers;
g) As the resin does not have to travel a long distance from entry point to exit point the resin does not need to be of low viscosity or of consistent viscosity. Therefore the resin that can be used for this production process is typically relatively lower in cost to purchase and is of a longer chain resin type than the type of resin used in conventional production processes such as resin transfer moulding (RTM). The use of this type of resin leads to a composite product which has greater strength and toughness than composite components produced using other resins; and
h) Resins of different types can be sprayed on the mould surface. Different resins may be sprayed on different areas of the mould surface. Different resin layers may also be sprayed in an overlapping or blended manner over the mould surface.
i) Layers of resin containing pigment or powders can be applied to the surface whilst the resin containing these pigments or powders is in a heated state. This produces a surface that would be the equivalent of a painted or gel coat surface but without any added weight or wasted resin as this is drawn into the part to wet out the part and produces a nett part ready for installation on the aircraft or vehicle. In a further benefit of this approach sections, areas or edges of the part could be recessed and left uncured/partially cured so as to be melded under the applicant's International application no. WO 01/64387 to another section.

Therefore, advanced composite components produced according to the applicant's method have superior material properties to components using more conventional composite component production processes.

When the fibre bundles are laid over the resin layer, the fibres within each bundle generally lie in a plane parallel to the plane of the resin layer. Different fibre bundle layers can be laid, one on top of each other in criss-cross fashion with the fibre direction being varied by an amount ranging up to 90 degrees for each adjacent layer (we will refer to these fibre directions as the "x and y directions" respectively). These fibres therefore tend to provide reinforcement within the final composite component, primarily in the x and y directions. It would however be advantageous to be able to also provide reinforcement in a direction perpendicular to the general plane of the fibre bundles (referred to as the "z direction"). This will provide a composite component having significantly greater resistance to delamination as reinforcement is also provided in the z direction.

While it is known to distribute fibre spicules or nanoparticles within the resin and fibre bundles to provide additional reinforcement, some in the z direction, it is difficult to control the alignment of these fibres/nanoparticles as they move through the laminate. In practice the use of nano particles for reinforcement of a laminate has been applied by adding nano particles to or dusting nano particles onto layers of solidified resin film known as Resin Film Infusion and then melting the resin to allow it to melt into and flow through the laminate and up through the laminate layers. This is effective in providing nano particles within the laminate and aligning them to an extent. However it is very high cost and difficult to achieve on a complex shaped part and limited in its effectiveness when more than one layer of solidified resin film is applied to the mould surface as it has proven very difficult to remove the air trapped between the layers of the resin film. To overcome this problem recent industry research and development has concentrated on the use of nano particles with resin infusion whereby the resin moving through the laminate is meant to draw the nano particles through the laminate and remove the air. This has not been successful as the laminate filters out the nano particles and leaves them in clumps or layers and there is no alignment at all and no even distribution in the part from one end to the other or through the thickness from one side to the other. In International application nos. WO 2007/136755, WO 2008/054541 and WO 2009/029218 all in the name of Massachusetts Institute of Technology, there are described methods for using aligned nanostructures that can provide reinforcement in the z direction. The process described in these applications require that these aligned nanostructures be grown and then positioned in the interface between opposing substrates. The use of these processes are therefore difficult to apply in practice. Furthermore, this process does not address the difficulties associated with the removal of air from the composite material from the solid resin film layers used to form the laminate and the mould surface and the layers of resin.

With this in mind, according to one aspect of the present invention there is provided a method for producing a composite component including the steps of: applying a liquefied resin over a surface, according to claim 1.

The composite component would therefore include reinforcement in the z direction provided by the nano particles or fibre spicules, with the composite lay-up providing reinforcement in the x and y directions.

The nano particles, if provided, may for example be in the form of carbon nano tubes. The nano particles may be distributed through and/or over a surface of the resin layer, while the resin layer is in a liquefied state. Furthermore, the surface and resin layer may be vibrated to distribute the nano particles through the resin layer. Nano particles of different sizes and/or types may be distributed through the resin layer.

Alternatively, the reinforcement means may include fibre spicules in the form of short lengths of reinforcing fibre of between 0.05 to 1mm in length. The fibre spicules may be distributed over the resin layer while the resin layer is in a liquefied state.

One or more resin flow rate control layers may be provided within the composite lay-up for controlling the distribution of the reinforcement means through the final composite component. The resin flow rate control layer may for example be in the form of a Kevlar veil. Reinforcement means such as nano particles and fibre spicules may also be distributed in the resin flow rate control layer.

The resin may be applied to the surface by spraying the liquefied resin over the surface, the resin then solidifying on the surface. The surface may itself be cooled by cooling air or other means as well as cooling through the mould skin to facilitate solidification of the resin to form the resin layer.

Resin may also be applied to the composite lay-up, the resin preferably being applied by spraying onto the composite lay-up. Reinforcement means may be included in the resin applied to the surface. Alternatively or in addition, reinforcement means may be included in the resin applied to the composite lay-up. Resins of different types and having different additives and/or said reinforcement means may be applied sequentially over the surface or over a said resin layer that has been previously applied. The different resin layers may include at least one of, a scratch resistant layer, a toughening agent layer, a lightning strike layer, or a fibre retardant layer.

The surface itself may be provided by an inner cavity of a rigid mould. Alternatively or in addition, the surface may be provided on another rigid surface such as a caul plate, or a flexible or elastically deformable surface such as a vacuum bag wall or in the form of an open weave cloth or flexible carrier to hold the resin.

The reinforcement along the x and y directions may be provided by fibre bundle layers of fibre glass, carbon fibre or other similar material. These fibre bundle layers may be laid over the resin layer prior to the final production process as will be subsequently described. In another preferred arrangement, the resin layer can be laid over the fibre bundles that have already been placed in the mould for example in the production of a honeycomb core where the laminates need to be positioned on either side of the core. In this example resin can be applied to the face of the mould and a layer of fibres positioned over the resin and then a core can be positioned over the layer of fibres then on the opposite side of the core to the mould surface a layer of resin can be applied preferably sprayed onto a surface and solidified. This surface can be either a vacuum bag a caul plate or any other suitable carrier to hold the resin that upon melting is released to provide the materials to wet the laminate layer on the core. This carrier can be supported on a chilled tool and sprayed on this tool to ensure that the resin solidifies in the spots, areas, and sections that are needed for the required laminate thickness and that the thickness of resin and shape of the carrier is corresponding to the approximate shape and thickness of the inner skin of the part as formed as it drapes over the sections of core; foam, honeycomb etc.

The reinforcement means along the z direction may be provided by distributing fibre spicules in the form of short lengths 0.05 to 1 mm of reinforcing fibre over the resin layer while still "wet". This cutter producing the fibres could be similar to a conventional fiberglass chopper gun but on a much smaller scale and may for example be used to spray an evenly distributed series of fibre spicules over the resin layer whilst the resin layer is still hot. Or alternately the resin layer can be laid down and solidified then hot air from a heat gun applied to the surface to re liquefy the outermost layer of the resin for the spicules to embed into. The heat gun and the cutter gun could be integrated to enable the process to proceed in close sequence and proximity to one another. The spicules at least partially become embedded into the resin layer in a direction generally at an angle to the surface of the resin layer to thereby form a "fluffy" surface over the resin layer. More resin can then be applied using the applicant's process and wetting and encapsulating the spicules and or nano particles and removing the air trapped within the forest of particles.

Therefore, once the laminate layers/prepacks are placed into position and the air is removed and the resin melts and flows into the laminate the spicules penetrate between the fibres of the fibre bundles laid over the top of the resin layer. The fibres within the fibre bundles generally extend as previously noted in the x and y directions, while the spicules generally extend in the z direction. The spicules therefore act to tie together the reinforcing fibres of the fibre bundles in the final advanced composite component leading to improved delamination resistance by providing reinforcement in the z direction.

Alternatively, the reinforcement means along the z direction may be in the form of nano particles distributed within the resin or over the surface of the resin layer when still in a liquid state. These nano particles may be formed from carbon nano-tubes having dimensions within the nano scale. Vibration means may be provided to vibrate the resin layer and thereby more evenly distribute disperse the nano particles over or within the resin layer as well as breaking up any clumps of nano particles. Because the sizes of the nano-tubes are in the nano scale, they can travel up in a stream through the resin and between the fibres of the fibre bundles during the subsequent production process when the resin layer is again liquefied. These nano-tubes can also pass through any resin control veil located over the resin layer or between the fibre bundles thereby aligning themselves generally along the z direction. These nano-tubes therefore act to provide reinforcement in the z direction in the final composite component after curing of the resin. However the greater the distance of travel the more disturbed blocked filtered and dispersed misaligned the nano particles become. Therefore the benefits of alignment of the particles to commence with as outlined in the MIT patent diminish with the distance that the nano particles must travel to wet out the part.

In a preferred embodiment, nano-tubes of different sizes could be used. The movement of the nano-tubes may therefore be controlled by using one or more resin flow rate control layers, the layers only allowing nano-tubes of a particular size to pass therethrough. Therefore, larger nano-tubes are unable to pass and remain in the area behind the films. This allows for more precise control of the nano-tube distribution through the final composite component.

In addition the resin control layers can also contain or contribute to the content of nano particles in the part; as the resin is drawn up and or flows through the resin control layers the resin can move nano particles contained in the control layer out of the control layer and into the adjacent laminate/s. Reinforcement means such as nano particles or fibre spicules can be distributed over the resin control layers prior to impregnation by the liquefied resin. In this way the resin can be used to disperse the nano particles or fibre spicules from the resin control layers into the laminate.

Preferably, more than one resin layer may be applied, with each layer having different physical properties. This may be achieved by depositing resins of different types and having different additives and/or reinforcement means sequentially over an underlying previously applied resin layer. For example, the different resin layers may be deposited in the following order. The first deposited layer may include additives for UV resistance and colour or may be a resin type that provides greater scratch resistance for that layer. The next deposited layer may include toughening agent additives, the next may be a stiffening additive, the next a high temperature additive and for example the last deposited layer may include fire retardant chemical additives. A resin layer may also include lightning strike additives such as carbon black which is beneficial for use in aircraft construction for electrical conductivity. The final composite component produced according to the present invention may be provided with varying physical properties through the thickness of the component and or along the length of the component.

The advanced composite component produced according to the present invention is expected to improve the inter laminar shear and toughness thus improving the lamination strength when compared with composite components produced using conventional methods. It is also expected to be tailored to suit the chemical electrical or mechanical requirements for that particular part in that specific area.

In the applicant's International application no. WO 02/058916, the system used to compact and cure the composite lay-up includes an arrangement for supporting the mould between opposing pressure chambers. Each pressure chamber includes an elastically deformable chamber wall, and fluid at elevated temperature and pressure is circulated through each pressure chamber. This system is particularly applicable for use in producing advanced composite components where liquefied resin is applied to the mould surface to form a solid resin layer. The method according to the present invention however encompasses the application of resin on other surfaces.

Therefore, the method of the present invention may include applying the liquefied resin on a mould surface of a mould, locating the mould together with the composite lay-up between first and second pressure chambers, each pressure chamber having an elastically deformable chamber wall, the chamber walls being located in opposing relation with the mould assembly located therebetween; further applying liquefied resin and fibre spicules or nano particles on an opposing surface facing the mould, the resin on the opposing surface solidifying to form an opposing resin layer, such that the composite lay-up is locatable between said resin layers; and circulating a fluid at an elevated pressure and temperature through each pressure chamber such that the resin layers are liquefied and the composite lay-up is compressed, impregnated with resin, optionally vibrated, and cured.

The liquefied resin may be applied to the elastically deformable chamber wall of a said pressure chamber. Alternatively, where a vacuum bag is used to extract air from and to consolidate the composite lay-up, the resin may be applied to the side of the vacuum bag facing the composite lay-up.

As previously discussed, a preferred method for applying the resin is by spraying the liquefied resin onto the surfaces. More than one layer of resin may be applied to each surface, with each subsequent resultant resin layer may have different material properties.

Furthermore, reinforcement means for providing reinforcement in the z direction as previously discussed may also be provided in the opposing resin layers.

Correspondingly, if the laminate is being wet from both directions and the resin is coming together from being deposited upon the mould face side and the vacuum bag carrier or cawl plate side then the resin applied to the opposite side to the mould is deposited on the carrier in the order of its required final position within the laminate.

The composite lay-up may be provided by a central core layer sandwiched between opposing fibre bundle layers. Resin flow rate control films may be provided between the central core layer and the fibre bundle layers to control or prevent resin impregnating the central core layer. The resultant composite component produced according to this method will have a central core covered on opposing sides thereof with a fibre reinforced skin.

Alternatively, the composite lay-up may be provided by a "prepack" made from fibre bundle layers preformed into a desired shape and including components such as attachment lugs and other mechanical components that are to be imbedded into the final composite component. The fibre bundle layers forming the prepack may be provided with a sizing material to enable the prepack to hold its preform shape prior to curing. Because the prepack can vary substantially in cross section width/thickness, with some cross sections being substantially thicker than others above 10mm, it is not always possible to ensure adequate resin impregnation during the curing process by the placement of the resin on the mould surface and the inner surface alone. Furthermore, it may not be possible to provide adequate reinforcement in the "z" direction of the fibre bundle layers. Therefore, a preferred feature of the present invention is to further apply liquefied resin directly onto the composite lay-up, and or carriers to be embedded in and form part of the composite layups. This therefore provides the additional required resin on thicker areas of the composite lay-up. Furthermore if the molten liquid resin is sprayed onto the prepack as it is being assembled, the resin when solidified acts like a hot melt glue and helps to hold the prepack of many layers of the composite lay-up together during handling and placement into the mould and as part of the curing process as the surrounding resin layers liquefy again. It is to be appreciated by those skilled in the art that only a limited amount of resin can be added at this point so as to ensure that the resin does not close off or blind the air release paths through the prepack prior to the vacuum being applied and the heat wave moving over the part to remove the last of the air from the laminate.

In addition, the resin spraying onto the composite lay-up may include reinforcement means such as nano particles or spicules. Therefore, during the subsequent curing process, the nano particles can migrate through the composite lay-up to provide the necessary reinforcement in the "z" direction.

This production method is particularly useful for producing more complex composite components having a central core layer or attachment lugs and other devices formed within the component. In aeronautical applications, a Nomex (Registered Trade Mark) honeycomb layer is commonly used to form a central core within aircraft panels because of its light weight and high flame resistance. The panel would have fibre reinforced skins provided on opposing faces of the central core. Such a panel can be readily formed using the method of the present invention, with the composite lay-up being formed from a central Nomex core with fibre bundle layers positioned over the opposing faces of the core. Resin control veils may also be located between the central core layer and the fibre bundle layers for controlling or preventing the ingress of resin into the central core layer.

As previously discussed, any air retained in the fibre bundles is evacuated as the fibre bundles sink into the previously solidified resin as it melts. The evacuation of air may be facilitated by locating both the resin layer and composite lay-up in a vertical alignment and progressively liquefying the resin layer from the bottom up. This results in a "resin wave" which forces the air upwards and away from the fibre bundle further minimising the amount of air bubbles remaining within the final composite component. This may be achieved by using the above described system where the liquid progressively fills each pressure chamber such that the, or each resin layer is progressively heated from a lowermost portion thereof towards an uppermost portion thereof. This provides a "heat wave" along the mould and therefore the resin layer(s) and composite lay-up.

Therefore, the method of the present invention may include applying the liquefied resin on a mould surface of a mould,
locating the mould with the composite lay-up between first and second pressure chambers, each pressure chamber having an elastically deformable chamber wall, the chamber walls being located in opposing relation and aligned in a generally vertical direction with the mould located therebetween;
circulating a fluid at an elevated pressure and temperature through each pressure chamber such that the resin layer is liquefied and the composite lay-up is compressed, impregnated with resin and cured;
wherein the pressure chambers are initially progressively filled with the fluid such that the resin layer is progressively liquefied from the bottom thereof and upwards.

This method facilitates the evacuation of air from the fibre bundles.

It may also be preferable to isolate the production of the advanced composite component using the above described system into high and low temperature production zones.

To this end, the method may include applying the liquefied resin on a mould surface of the mould, locating the mould together with the composite lay-up between first and second pressure chambers, each pressure chamber having an elastically deformable chamber wall, the chamber walls being located in opposing relation with the mould located therebetween, circulating fluid at an elevated pressure and temperature through each pressure chamber such that the resin layer is liquefied and the composite lay-up is compressed impregnated with resin and cured; wherein the first and second pressure chambers are continuously held at the elevated temperature, and the mould is cooled externally away from said pressure chambers.

The temperatures within the production plant may be maintained at a relatively high temperature such that it is unnecessary to reheat the production plant between each curing event and only the mould goes through the curing cycle which requires heating and cooling which requires the minimum of energy applied to heat and cool the mould only when a mould supporting the resin layer and composite lay-up is inserted into the plant and compressed and heated. The cure cycle is thus split and separate with the pressure chamber and its piping remaining hot and only the mould with the part being heated and cooled; thus the mould may be extracted from the plant and cooled in a separate zone such that it is unnecessary to circulate fluid at cooler temperature through the plant to cool the entire plant and the cured composite component. The mould may for example be removed from the hot pressure chamber robotically and be laid onto a cooling bladder through which cool liquid is being circulated thereby allowing for controlled cooling of the mould. This has the additional advantage in that there is less likelihood of high stress levels from uneven cooling and micro cracking *ie* "crazing" occurring within the cured resin of the composite component. It is therefore no longer necessary to reheat the production plant pressure chamber for the next mould thereby facilitating faster cycle times and less energy wastage in the production process. It may be advantageous to use the mould carrier as the cooling zone to facilitate time savings by movement of the mould from one station to another during the cooling cycle. It may not be necessary to chill the moulds for the first production part but with continuous production this will be an integral part of the process otherwise the moulds will remain hot for a long time stopping the ability of the resin to solidify on contact with the mould and slowing production.

It will be convenient to further describe the invention with respect to the accompanying drawings which illustrate a preferred embodiment of the method for producing advanced composite components according to the present invention. Other embodiments of the invention are possible, and consequently, the particularity of the accompanying drawings is not to be understood as superseding the generality of the preceding description of the invention.

In the drawings:
Figure 1 is a partial side cross-sectional view of a mould and a resin layer according to the present invention;
Figure 2 is a partial side cross-sectional view of the mould of Figure 1 with the fibre bundles and flow control veils located on the resin layer to form a composite lay-up;
Figure 3 is a partial side cross-sectional view of the mould and composite lay-up of Figure 2 showing the direction of transfer of the nano particles during the curing process according to the present invention; and
Figure 4 is a partial cross-sectional view of the mould, composite lay-up and opposing pressure chamber wall of a production plant according to the present invention;
Figure 5(a) to (g) show the various stages in the production process according to the present invention; and
Figure 6 depicts a prepack being assembled with heated resin being sprayed between layers to stabilised and adhere each layer together as the resin cools and solidifies.

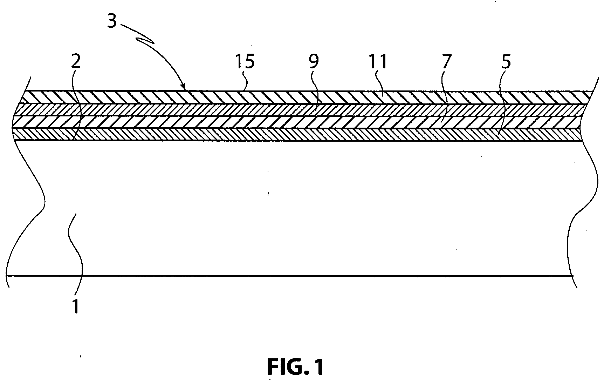

Referring initially to Figure 1, a section of a mould 1 having a mould surface 2 is shown. A solidified resin layer 3 has been applied on to the mould surface 2. The resin layer 3 is itself formed by different resin layers 5, 7, 9, 11 having different physical characteristics. For example, the layer 5 immediately adjacent the mould surface 2 may be provided by a layer of resin which, when cured, may have a high scratch resistance. The next layer 7 adjacent the first layer 5 may be a mixture of resin and carbon black to provide lightning strike resistance for the composite component. The next layer 9 may include a toughening agent to help to increase the strength of the final composite component. The final outermost layer 11 may include a fire retardant additive. Different combinations of resin layers are also envisaged depending on the application of the composite component.

According to one preferred embodiment of the method according to the present invention, reinforcing fibre spicules may be sprayed over the still wet resin layer 3 so that the spicules become at least partially embedded in the resin layer. This provides a furry upper surface for the resin layer 3, this furry surface being formed by the fibre spicules extending upwardly and away from the resin layer 3 in a direction generally lateral from the mould surface 2 (referred to as the z direction).

According to another preferred embodiment of the method according to the present invention, nano particles in the form of carbon nano tubes may be mixed into the resin layer 3. Vibration means can be provided to vibrate the mould 1 and thereby assist in the more even distribution of the nano tubes and the breaking up of clumps of nano tubes within the resin layer 3. It is also envisaged that nano particles can be distributed over the uppermost surface 15 of the resin layer 3.

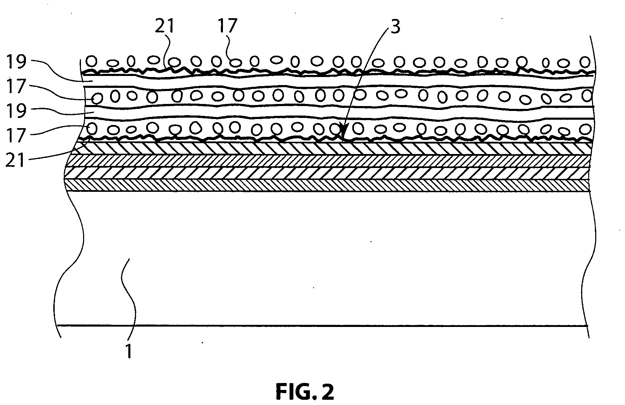

Figure 2 shows the next step in the method according to the present invention where a number of different layers of fibre bundles 17, 19 are laid over the resin layer 3. The fibre bundles 17, 19 are laid in a criss-cross fashion such that the fibres in each fibre bundle layer are generally aligned up to 90 degrees relative to each other. Therefore, the fibres of the fibre bundle 17 closest to the resin layer extends in a direction into the page when viewing Figure 2, where as the fibres of the next fibre bundle layer 19 extends up to 90 degrees to the fibres of the first fibre bundle 17, and therefore across the page when viewing Figure 2. This arrangement is repeated in the next three fibre bundle layers 17, 19. A Kevlar veil 21 may be located between the resin layer 3 and the first fibre bundle layer 17. A second Kevlar veil 21 may also be located between the two uppermost fibre bundle layers 17, 19 away from the mould surface 2. These Kevlar veils act to control the rate of flow of resin through the fibre bundle layers during the curing process when the resin layer 3 is initially liquefied due to the heat applied to the mould and composite lay-up.

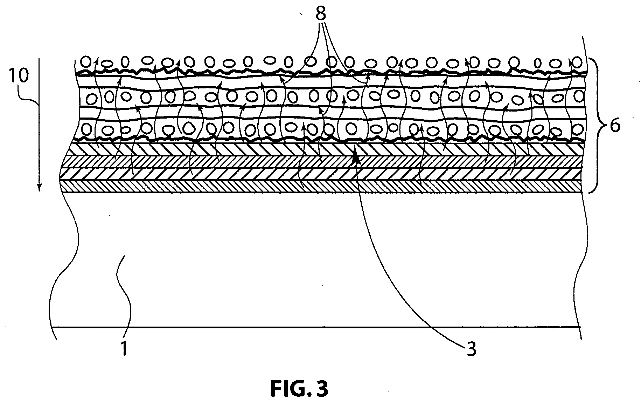

Figure 3 shows the composite lay-up 6 during the curing process. A vacuum bag (not shown) is laid over the composite lay-up 6. The full vacuum is drawn down to remove all the air from the lay-up 6 using the free path ways existing in the fibre bundles 17, 19 prior to applying the heat and liquefying the resin layer 3. If the part is wet out before the air has been evacuated then the wet resin will move up in an uncontrolled manner and block off the air paths preventing the venting of the whole lay-up 6 before all the air is removed. Also the fibre bundles need to be heated to the right temperature for wetting with the resin. Therefore, as heat and pressure is applied to the composite lay-up 6, the resin layer 3 begins to liquefy and the fibre bundles 17, 19 begin to sink into and be wet out by the resin layer as shown by arrow 10.

In the method where fibre spicules are embedded in the upper surface of the resin layer 3, the fibre spicules embed themselves into the fibre bundles when the fibre bundles are initially located over the resin layer 3. During the curing process, these spicules help to key together the various fibre bundles thereby providing reinforcement in the z direction.

In the method where nano particles are distributed through the resin layer 3, the nano particles begin to stream through the fibre bundles together with the liquid resin as the heat and pressure is applied to the composite lay-up. This is shown by arrows 8. The Kevlar veils 21 act to control the rate of transfer of the resin and the nano particles and act to control the flow and capture any nano particles that reach the outermost veil preventing them from travelling any further. Also the veils 21 can act to filter various nano particles and different types and sizes of nano particles that need to be concentrated at various layers eg scratch, lightening strike, toughening and fire could all be separated out respectively where needed. The nano particles, when the composite component is fully cured act to reinforce the component in the z direction and or provide specific properties where required.

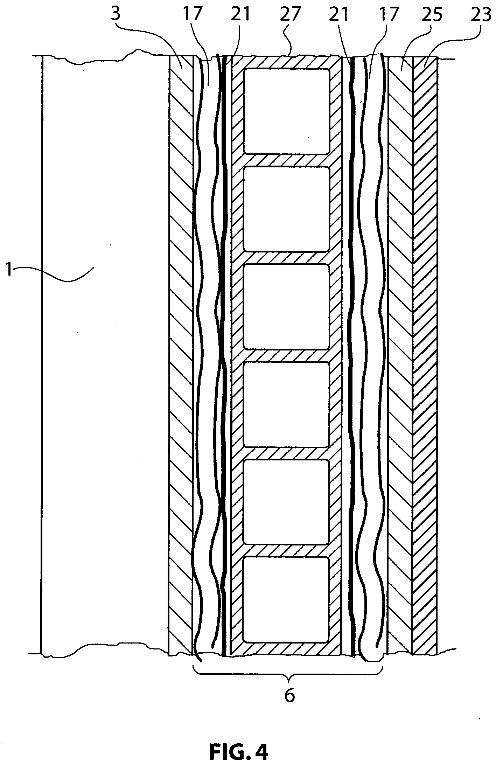

The production plant described in the applicant's International application no. PCT/AU02/00078, details of which are incorporated herein by reference, can be used to cure the composite lay-ups prepared according to the present invention. It is however to be appreciated that more conventional manufacturing methods and systems can be used to cure this composite lay-up. The applicant's production plant utilises opposing pressure chambers through which liquid at elevated temperature and pressure is circulated during the production process. The mould 1 can be located between the opposing pressure chamber walls of each pressure chamber. Figure 4 shows in more detail the use of this production plant in the production of a composite component according to the present invention. On the mould 1 is applied a resin layer 3. A composite lay-up 6 can then be laid over the mould 1 and resin layer 3. A vacuum bag 23 is then laid over the lay-up 6 and air withdrawn from under the vacuum bag 23 to both provide an initial compaction of and evacuate air from the lay-up 6. According to a preferred arrangement, a second resin layer 25 can be pre-deposited on the surface of the vacuum bag 23 facing the composite lay-up 6. Alternatively, in the case where a caul plate or carrier is used, the second resin layer 25 could be pre-deposited on the surface of the caul plate facing the lay-up 6. In Figure 4, the composite lay-up 6 is located between opposing resin layers 3, 25 prior to the start of the curing process. The composite lay-up 6 can include a central core layer 27 provided for example by a Nomex honeycomb core. On opposing sides of the central core layer 27 is provided fibre bundle layers 17, with a Kevlar veil 21 being provided between the central core layer 27 and each fibre bundle layer 17.

During the curing process within the production plant, the resin layer on both the mould 1 and the caul plate or vacuum bag 23 liquefies and respectively impregnates the adjacent fibre bundle layer 17. The Kevlar veils 21 act to minimise or prevent the impregnation of resin into the Nomex core 27. The resultant composite component includes a central core 27, in this case a Nomex honeycomb layer, covered on opposing sides with a fibre reinforced skin. Such panels are particularly applicable for use in aeronautical applications.

In order to facilitate the production of a quality composite component, the mould 1, and the pressure chamber walls 23 can be aligned in a generally vertical direction. During the initial stages of the production process, each pressure chamber is progressively filled with heated fluid such that both resin layers 23, 25 are progressively heated from their lowermost portion towards the uppermost portion. The resin layers 3, 25 are therefore progressively liquefied from the bottom upwards resulting in a molten resin wave which progresses upwardly along the part and through the fibre bundle layers 17. This ensures that air is evacuated upwardly away from the fibre bundles 17 as they are being progressively impregnated by the liquefied resin. This helps to minimise any remaining air bubbles within the fibre reinforced skins of the final composite components leading to improved physical characteristics. This progressive filling of the pressure chambers, which results in a "heatwave" across the resin layer/s and along the part from bottom to top, can of course be used where only one, or many layers of resin are required to be liquefied.

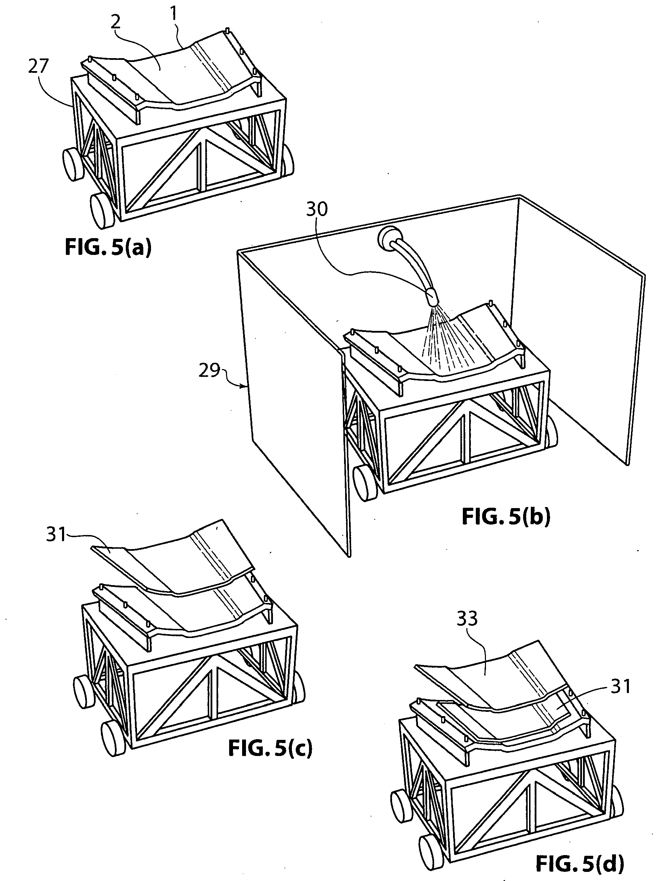

Figures 5(a) to (g) show the various steps involved in the production process according to the present invention. A mould 1 is initially placed on a trolley 27 as shown in Figure 5(a), with the mould surface 2 of the mould facing upwardly. The trolley 27 involves cooling means to lower the temperature of the mould surface 2 to facilitate the chilling and solidification of the resin layers 3. This cooling means can be in the form of an air cooling blast or a cooling bladder located under the mould 1, or cooling tubes located within the mould or within the table top portion of the trolley 27 itself.

The trolley 27 is moved to a spray enclosure 29, where a spray nozzle 30 sprays liquefied resin onto the mould surface 2. This resin solidifies to form a resin layer 3 on the mould surface 2. As previously discussed the resin layer 3 may itself be formed of different resin layers sprayed, one on top of each other in successive resin sprayings, with different physical characteristics.

After the spraying is completed, and the resin layer 3 has solidified, a prepack 31 formed from an assembly of fibre bundle layers held together by a sizing or by drops of solidified resin presprayed over the fibre bundles, the resin solidifying to thereby hold the fibre bundles together. Nanotubes may also be sprayed or otherwise distributed over regions on or in the prepack 31 where they are required within the final curved cured composite component.

A vacuum bag 33 is laid over the prepack 31 and mould 1, as shown in Figure 5(d). Air is evacuated from under the vacuum bag 33 to extract most of the air out from within the prepack 31, as well as to provide preliminary compaction of the prepack 31.

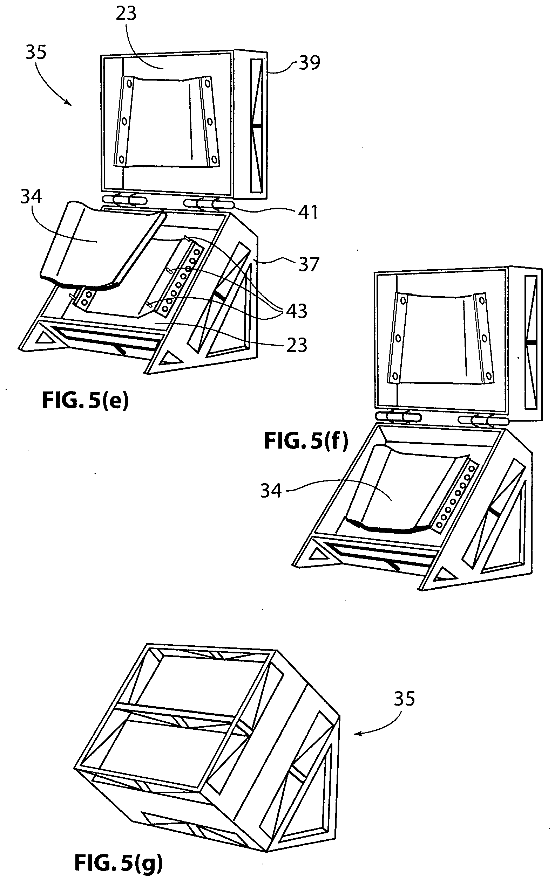

The mould assembly 34 including the prepack 31, and vacuum bag 33 is then removed from the trolley 27 and placed into the production plant 35 as shown in Figure 5(e). This production plant includes opposing lower and upper pressure chambers 37, 39, each pressure chamber having resiliently deformable pressure chamber walls 23. The pressure chambers 37, 39 are connected by a hinge 41 to enable the mould assembly 34 to be located between opposing pressure chamber walls 23. The production plant 35 is held at an elevated operating temperature so that it is not necessary to reheat the plant during each curing cycle. This differs from the operation of the production plant described in the applicant's International application no. PCT/AU02/00078 which was required to also cycle between different operating temperatures thereby resulting in slower cycle time thus slower production times and higher energy costs. The pressure chambers 37, 39 can be pressurised with nitrogen to provide a compaction pressure on the mould and laminate after which hot liquid is then progressively introduced into the pressure chambers that are held in an inclined position to thereby facilitate the use of a heatwave to progressively liquefy the resin layer 3 from the bottom up thereby facilitating the removal of any remaining air as previously described. It is to be noted that this process of operation in a vertical or semi vertical state is enhanced by the application of the column pressure of the HTF fluid acting against the melting resin and maintaining it in its sprayed position. This Balanced Density effect is outlined in the applicant's patent application no. 2006265783 and without this balancing effect the melting resin would tend to run down the face of the mould and "wick" down to the bottom of the part. Locating pins 43 are provided on other of the pressure chamber walls 23 to hold the mould assembly 34 in position within the production plant 35 as shown in Figure 5(f). The upper pressure chamber is then closed over the lower pressure chamber for the curing cycle as shown in Figure 5(g). At the end of the curing cycle the hot fluid is pumped out of the pressure chambers and the bladders that were in contact with the mould 1 are drawn back from the mould thus releasing it from the compaction pressure. Once the bladders have been withdrawn the pressure chambers 37 and 39 can be opened and the part withdrawn in a hot state by a robot. From the production plant 35 and placed on a trolley for cooling. The cooling means on the trolley facilitates quick cooling of the composite component minimising the possibility of crazing in the component.

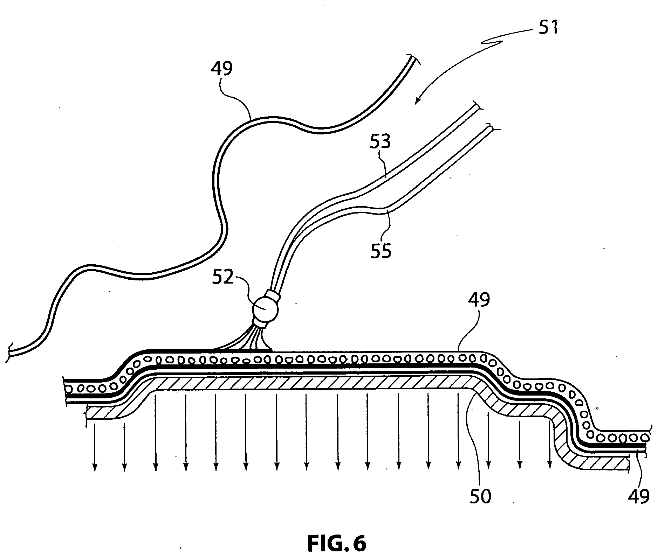

Figure 6 shows in more detail the assembly of the prepack 31. Successive fibre bundle layers 49 are laid on an open form 50 or "maule". A vacuum holds the layer on the open form 50 while liquefied resin is sprayed on the fibre layer by a resin gun 51. This resin gun sprays hot resin through a mixing head 52, with a resin line 53 and hardener line 55 respectively supplying heated resin and hardener to the mixing head 52. Additional fibre bundle layers 49 are successively laid over the resin sprayed preceding layer.

It is to be appreciated that the central core layer 27 may be replaced with a prepack 31 when forming composite components of more complex shape and thicknesses. The prepack 31 may also be pre-sprayed with liquefied resin including reinforcement means such as the nano particles. This resin, when solidified acts to hold together the prepack 31 during the subsequent curing process. In addition, the additional resin in the prepack 31 liquefies again to assist in the impregnation of the prepack 31 while at the same time ensuring that sufficient nano particles enter the interior of the prepack 31 to provide the necessary reinforcement in the z direction as previously described.

Modifications and variations as would be deemed obvious to the person skilled in the art are included within the ambit of the present invention as claimed in the appended claims.

## Claims

1. A method for producing a composite component including the steps of:
applying a liquefied resin over a surface (2), the resin solidifying to form a resin layer (3) thereon; laying a composite lay-up (6) over the resin layer; and applying heat and pressure to the resin layer (3) to liquefy the resin such that the composite lay-up (6) sinks into and is impregnated by the liquefied resin, wherein, while the resin layer is in a liquefied state, either (a) nano particles are distributed within the resin layer or over the surface of the resin layer, or (b) fibre spicules having a length of 0.05 to 1 mm are distributed over the resin layer (3), the nano particles or spicules being released and transferred through the composite lay-up (6) prior to curing of the resin, and wherein in the final composite component, the nano particles or fibre spicules provide reinforcement in a z direction generally perpendicular to the surface (2).

2. A method according to claim 1, wherein the nano particles are in the form of carbon nano tubes.

3. A method according to claim 1 or 2, including vibrating the surface (2) and resin layer to distribute the nano particles through the resin layer.

4. A method according to any one of claims 1 to 3, wherein nano particles of different sizes and/or types are distributed through the resin layer (3).

5. A method according to claim 4, wherein one or more resin flow rate control layers (21) are provided within the composite lay-up (6) for controlling the distribution of the nano particles or fibre spicules through the final composite component.

6. A method according to claim 5, wherein the resin flow rate control layer is in the form of a Kevlar (Registered Trade Mark of DuPont) veil (21).

7. A method according to claim 5 or 6, further including distributing said nano particles or fibre spicules in the resin flow rate control layer (21).

8. A method according to any one of the preceding claims, wherein the liquefied resin is applied by spraying onto the surface (2).

9. A method according to any one of the preceding claims including further applying resin to the composite lay-up (6).

10. A method according to claim 9, wherein the resin is applied by spraying onto the composite lay-up (6).

11. A method according to any one of the preceding claims, wherein the nano particles or fibre spicules are included in the applied liquefied resin.

12. A method according to any one of the preceding claims, wherein resins (7, 9, 11) of different types and having different additives and/or said nano particles or fibre spicules are applied sequentially over the surface (2) or over a said resin layer (5) that has been previously applied.

13. A method according to claim 12, wherein the different resin layers include at least one of, a scratch resistant layer (5), a toughening agent layer (9), a lightning strike layer (7), or a fire retardant layer (11).

14. A method according to any one of the preceding claims, wherein the surface upon which the resin layer is formed is a mould surface (2) of a mould (1), and the mould together with the composite lay-up (6) is located therein between first and second pressure chambers (37, 39), each pressure chamber having an elastically deformable chamber wall (23), the chamber walls being located in opposing relation with the mould (1) located therebetween; the method including: further applying liquefied resin and fibre spicules or nano particles on an opposing surface (23) facing the mould, the resin on the opposing surface solidifying to form an opposing resin layer (25), such that the composite lay-up (6) is locatable between said resin layers (3, 25); and circulating a fluid at an elevated pressure and temperature through each pressure chamber (37, 39) such that the resin layers are liquefied and the composite lay-up is compressed, impregnated with resin and cured.

15. A method according to any one of claims 1 to 12, wherein the surface upon which the resin layer (3) is formed is a mould surface (2) of a mould (1), and the mould together with the composite lay-up (6) is located therein between first and second pressure chambers (37, 39), each pressure chamber having an elastically deformable chamber wall (23), the chamber walls being located in opposing relation and aligned in a generally vertical direction with the mould located therebetween;
circulating a fluid at an elevated pressure and temperature through each pressure chamber (37, 39) such that the resin layer (3) is liquefied and the composite lay-up (6) is compressed, impregnated with resin and cured;
wherein the pressure chambers (37, 39) are initially progressively filled with the fluid such that the resin layer (3) is progressively liquefied from the bottom thereof and upwards.

16. A method according to any one of claims 1 to 12, wherein the surface upon which the resin layer is formed is a mould surface (2) of a mould (1), and the mould together with the composite lay-up (6) is located therein between first and second pressure chambers (37, 39), each pressure chamber having an elastically deformable chamber wall (23), the chamber walls being located in opposing relation with the mould (1) located therebetween, circulating fluid at an elevated pressure and temperature through each pressure chamber (37, 39) such that the resin layer (3) is liquefied and the composite lay-up (6) is compressed, impregnated with resin and cured; wherein the first and second pressure chambers (37, 39) are continuously held at the elevated temperature, and the mould is cooled externally away from said pressure chambers.

17. A method according to claim 16, wherein the mould (1) is removed from between the pressure chambers (37, 39) and laid on a cooling means for cooling the cured composite component.

18. A method according to any one of claims 15 to 17, further including applying liquefied resin on an opposing surface (23) facing the mould (1), the resin on the opposing surface solidifying to form an opposing resin layer (25), such that the composite lay-up (6) is located between said resin layers (3, 25).

## Patentansprüche

1. Verfahren zur Herstellung von Verbundstoffkomponenten umfassend die Schritte:
Auftragen eines verflüssigten Harzes über eine Oberfläche (2), wobei das Harz erstarrt um eine Harzschicht (3) darauf zu bilden; Legen einer Verbundauflage (6) über die Harzschicht; und Anwenden von Wärme und Druck auf die Harzschicht (3) um das Harz zu verflüssigen, so dass die Verbundauflage (6) hinein sinkt und durch das verflüssigte Harz imprägniert wird, wobei, während die Harzschicht in einem verflüssigten Zustand ist, entweder (a) Nanopartikel innerhalb der Harzschicht oder über der Oberfläche der Harzschicht verteilt werden, oder (b) Fasernadeln mit einer Länge von 0,05 bis 1 mm über der Harzschicht (3) verteilt werden, die Nanopartikel oder die Nadeln vor Aushärten des Harzes freigesetzt und durch die Verbundauflage (6) transportiert werden und wobei in der fertigen Verbundstoffkomponente die Nanopartikel oder Fasernadeln eine Verstärkung in einer z-Richtung im Wesentlichen rechtwinklig zu der Oberfläche (2) gewährleisten.

2. Verfahren nach Anspruch 1, wobei die Nanopartikel in Form von Kohlenstoff-Nanoröhrchen vorliegen.

3. Verfahren nach Anspruch 1 oder 2, umfassend Rütteln der Oberfläche (2) und Harzschicht um die Nanopartikel in der Harzschicht zu verteilen.

4. Verfahren nach einem der Ansprüche 1 bis 3, wobei Nanopartikel unterschiedlicher Größe und/oder unterschiedlichen Typs in der Harzschicht (3) verteilt werden.

5. Verfahren nach Anspruch 4, wobei eine oder mehrere Harzflussratensteuerschichten (21) in der Verbundauflage (6) bereitgestellt werden für die Steuerung der Verteilung der Nanopartikel oder Fasernadeln in der fertigen Verbundstoffkomponente.

6. Verfahren nach Anspruch 5, wobei die Harzflussratensteuerschicht (21) in Form eines Kevlar (registrierte Handelsmarke von DuPont)-Schleiers (21) vorliegt.

7. Verfahren nach Anspruch 5 oder 6, ferner umfassend Verteilen der Nanopartikel oder Fasernadeln in der Harzflussratensteuerschicht (21).

8. Verfahren nach einem der vorhergehenden Ansprüche, wobei das verflüssigte Harz durch Sprühen auf die Oberfläche (2) aufgetragen wird.

9. Verfahren nach einem der vorhergehenden Ansprüche, ferner umfassend Auftragen von Harz auf die Verbundauflage (6).

10. Verfahren nach Anspruch 9, wobei das Harz durch Sprühen auf die Verbundauflage (6) aufgetragen wird.

11. Verfahren nach einem der vorhergehenden Ansprüche, wobei die Nanopartikel oder Fasernadeln in dem aufgetragenen verflüssigten Harz enthalten sind.

12. Verfahren nach einem der vorhergehenden Ansprüche, wobei Harze (7, 9, 11) unterschiedlichen Typs und unterschiedliche Additive aufweisend und/oder die Nanopartikel oder Fasernadeln der Reihe nach über der Oberfläche (2) oder über der Harzschicht (5), die vorher aufgetragen wurde, aufgetragen werden.

13. Verfahren nach Anspruch 12, wobei die unterschiedlichen Harzschichten mindestens eine kratzresistente Schicht (5), eine Schlagzähigkeitsverbesserer-Schicht (9), eine Blitzschlag-Schicht (7) oder eine Flammschutzmittel-Schicht (11) enthalten.

14. Verfahren nach einem der vorhergehenden Ansprüche, wobei die Oberfläche, auf der die Harzschicht gebildet wird, eine Formwerkzeugoberfläche (2) eines Formwerkzeugs (1) ist und das Formwerkzeug zusammen mit der Verbundauflage (6) zwischen ersten und zweiten Druckkammern (37, 39) darin angeordnet ist, jede Druckkammer eine elastisch verformbare Kammerwand (23) aufweist, die Kammerwände gegenüberliegend mit dem dazwischen angeordneten Formwerkzeug (1) angeordnet sind; das Verfahren umfassend: ferner Auftragen von verflüssigtem Harz und Fasernadeln oder Nanopartikeln auf einer gegenüberliegenden Oberfläche (23), die dem Formwerkzeug zugewandt ist, wobei das Harz auf der gegenüberliegenden Oberfläche erstarrt um eine gegenüberliegende Harzschicht (25) zu bilden, so dass die Verbundauflage (6) zwischen den Harzschichten (3, 25) anordbar ist; und Zirkulieren eines Fluids bei einem erhöhten Druck und einer erhöhten Temperatur durch jede Druckkammer (37, 39), so dass die Harzschichten verflüssigt werden und die Verbundauflage gepresst, mit Harz imprägniert und gehärtet wird.

15. Verfahren nach einem der Ansprüche 1 bis 12, wobei die Oberfläche, auf der die Harzschicht gebildet wird, eine Formwerkzeugoberfläche (2) eines Formwerkzeugs (1) ist und das Formwerkzeug zusammen mit der Verbundauflage (6) zwischen ersten und zweiten Druckkammern (37, 39) darin angeordnet ist, jede Druckkammer eine elastisch verformbare Kammerwand (23) aufweist, die Kammerwände gegenüberliegend und in einer im Wesentlichen vertikalen Richtung ausgerichtet mit dem dazwischen angeordneten Formwerkzeug angeordnet sind;
Zirkulieren eines Fluids bei einem erhöhten Druck und einer erhöhten Temperatur durch jede Druckkammer (37, 39), so dass die Harzschicht (3) verflüssigt wird und die Verbundauflage (6) gepresst, mit Harz imprägniert und gehärtet wird;
wobei die Druckkammern (37, 39) zunächst zunehmend mit dem Fluid gefüllt werden, so dass die Harzschicht (3) zunehmend verflüssigt wird von der Unterseite an aufwärts.

16. Verfahren nach einem der Ansprüche 1 bis 12, wobei die Oberfläche, auf der die Harzschicht gebildet wird, eine Formwerkzeugoberfläche (2) eines Formwerkzeugs (1) ist und das Formwerkzeug zusammen mit der Verbundauflage (6) zwischen ersten und zweiten Druckkammern (37, 39) darin angeordnet ist, jede Druckkammer eine elastisch verformbare Kammerwand (23) aufweist, die Kammerwände gegenüberliegend mit dem dazwischen angeordneten Formwerkzeug (1) angeordnet sind; Zirkulieren von Fluid bei einem erhöhten Druck und einer erhöhten Temperatur durch jede Druckkammer (37, 39), so dass die Harzschicht (3) verflüssigt wird und die Verbundauflage (6) gepresst, mit Harz imprägniert und gehärtet wird, wobei die ersten und zweiten Druckkammern (37, 39) kontinuierlich auf der erhöhten Temperatur gehalten werden und das Formwerkzeug extern, entfernt von den Druckkammern gekühlt wird.

17. Verfahren nach Anspruch 16, wobei das Formwerkzeug (1) zwischen den Druckkammern (37, 39) entnommen und auf ein Kühlmittel zum Kühlen der gehärteten Verbundstoffkomponente gelegt wird.

18. Verfahren nach einem der Ansprüche 15 bis 17, ferner umfassend Auftragen verflüssigten Harzes auf eine gegenüberliegende Oberfläche (23), die dem Formwerkzeug (1) zugewandt ist, wobei das Harz auf der gegenüberliegenden Oberfläche erstarrt um eine gegenüberliegende Harzschicht (25) zu bilden, so dass die Verbundauflage (6) zwischen den Harzschichten (3, 25) angeordnet ist.

## Revendications

1. Procédé pour produire un composant composite comprenant les étapes consistant à : appliquer une résine liquéfiée sur une surface (2), la résine se solidifiant pour former une couche de résine (3) sur celle-ci ; poser un drapage composite (6) sur la couche de résine et appliquer de la chaleur et une pression sur la couche de résine (3) pour liquéfier la résine de manière que le drapage composite (6) s'enfonce dans la résine liquéfiée et soit imprégné par celle-ci, dans lequel, tandis que la couche de résine est à l'état liquéfié, soit (a) des nanoparticules sont réparties à l'intérieur de la couche de résine ou sur la surface de la couche de résine, soit (b) des spicules fibreux d'une longueur de 0,05 à 1 mm sont répartis sur la couche de résine (3), les nanoparticules ou les spicules étant libérés et transférés dans le drapage composite (6) avant que la résine durcisse et dans lequel, dans le composant composite final, les nanoparticules ou les spicules fibreux procurent un renforcement dans la direction z généralement perpendiculaire à la surface (2).

2. Procédé selon la revendication 1, dans lequel les nanoparticules sont sous la forme de nanotubes de carbone.

3. Procédé selon la revendication 1 ou 2, comprenant le fait de faire vibrer la surface (2) et la couche de résine pour répartir les nanoparticules dans la couche de résine.

4. Procédé selon l'une quelconque des revendications 1 à 3, dans lequel des nanoparticules de différentes tailles et/ou de différents types sont réparties dans la couche de résine (3).

5. Procédé selon la revendication 4, dans lequel une ou plusieurs couches (21) régulant le débit de résine sont prévues dans le drapage composite (6) afin de réguler la répartition des nanoparticules ou des spicules fibreux dans le composant composite final.

6. Procédé selon la revendication 5, dans lequel la couche régulant le débit de résine se présente sous la forme d'un voile (21) de Kevlar (marque déposée de Du Pont).

7. Procédé selon la revendication 5 ou 6, comprenant en outre la répartition desdites nanoparticules ou desdits spicules fibreux dans la couche (21) régulant le débit de résine.

8. Procédé selon l'une quelconque des revendications précédentes, dans lequel la résine liquéfiée est appliquée par pulvérisation sur la surface (2).

9. Procédé selon l'une quelconque des revendications précédentes comprenant une autre application de résine sur le drapage composite (6).

10. Procédé selon la revendication 9, dans lequel la résine est appliquée par pulvérisation sur le drapage composite (6).

11. Procédé selon l'une quelconque des revendications précédentes, dans lequel les nanoparticules ou les spicules fibreux sont inclus dans la résine liquéfiée appliquée.

12. Procédé selon l'une quelconque des revendications précédentes, dans lequel des résines (7, 9, 11) de différents types et ayant différents additifs et/ou lesdites nanoparticules ou lesdits spicules fibreux sont appliqués séquentiellement sur la surface (2) ou sur une dite couche de résine (5) préalablement appliquée.

13. Procédé selon la revendication 12, dans lequel les différentes couches de résine comprennent au moins une couche résistante aux rayures(5), une couche (9) d'agent durcissant, une couche antifoudre (7) ou une couche retardatrice de flamme (11).

14. Procédé selon l'une quelconque des revendications précédentes, dans lequel la surface sur laquelle est formée la couche de résine est la surface de moulage (2) d'un moule (1) et le moule, conjointement avec le drapage composite (6), est situé à l'intérieur entre des première et seconde chambres de pression (37, 39), chaque chambre de pression ayant une paroi de chambre (23) élastiquement déformable, les parois de chambre étant situées en relation d'opposition par rapport au moule (1) placé entre elles ; le procédé comprenant : une autre application de résine liquéfiée et de spicules fibreux ou de nanoparticules sur une surface opposée (23) face au moule, la résine sur la surface opposée se solidifiant pour former une couche de résine (25) opposée, de telle sorte que le drapage composite (6) puisse se situer entre lesdites couches de résine (3, 25) ainsi que la circulation d'un fluide à haute pression et à haute température dans chaque chambre de pression (37, 39) de manière que les couches de résine soient liquéfiées et le drapage composite soit comprimé, imprégné de résine et durci.

15. Procédé selon l'une quelconque des revendications 1 à 12, dans lequel la surface sur laquelle est formée la couche de résine (3) est la surface de moulage (2) du moule (1) et le moule, conjointement avec le drapage composite (6), est situé à l'intérieur entre les première et seconde chambres de pression (37, 39), chaque chambre de pression ayant une paroi de chambre (23) élastiquement déformable, les parois de chambre étant situées en relation d'opposition et alignées dans une direction généralement verticale avec le moule placé entre elles ; le procédé comprenant :
la circulation d'un fluide à haute pression et à haute température dans chaque chambre de pression (37, 39), de telle sorte que la couche de résine (3) soit liquéfiée et le drapage composite (6) comprimé, imprégné de résine et durci ;
dans lequel les chambres de pression (37, 39) sont d'abord progressivement remplies de fluide, de manière à ce que la couche de résine (3) soit progressivement liquéfiée en partant du bas vers le haut.

16. Procédé selon l'une quelconque des revendications 1 à 12, dans lequel la surface sur laquelle est formée la couche de résine est la surface de moulage (2) du moule (1) et le moule, conjointement avec le drapage composite (6), est situé à l'intérieur entre les première et seconde chambres de pression (37, 39), chaque chambre de pression ayant une paroi de chambre (23) élastiquement déformable, les parois de chambre étant situées en relation d'opposition par rapport au moule (1) placé entre elles ; le procédé comprenant : la circulation d'un fluide à haute pression et à haute température dans chaque chambre de pression (37, 39), de telle sorte que la couche de résine (3) soit liquéfiée et le drapage composite (6) comprimé, imprégné de résine et durci ; dans lequel les première et seconde chambres de pression (37, 39) étant maintenues en continu à haute température et le moule sont refroidi à l'extérieur en dehors desdites chambres de pression.

17. Procédé selon la revendication 16, dans lequel le moule (1) est retiré d'entre les chambres de pression (37, 39) et posés sur un moyen de refroidissement afin de refroidir le composant composite durci.

18. Procédé selon l'une quelconque des revendications 15 à 17, comprenant en outre l'application de résine liquéfiée sur la surface opposée (23) tournée vers le moule (1), la résine sur la surface opposée se solidifiant pour former une couche de résine (25) opposée, de telle sorte que le drapage composite (6) soit situé entre lesdites couches de résine (3, 25).
